Europäisches Patentamt

European Patent Office

Office européen des brevets

(19)

(11) **EP 0 919 814 B1**

(12) **FASCICULE DE BREVET EUROPEEN**

(45) Date de publication et mention
de la délivrance du brevet:
**07.07.2004 Bulletin 2004/28**

(51) Int Cl.⁷: $G01P\ 3/56$, $B60T\ 8/00$

(21) Numéro de dépôt: **98402960.3**

(22) Date de dépôt: **26.11.1998**

(54) **Procédé d'estimation de la vitesse d'un véhicule ou d'une association de véhicules**

Verfahren zur Abschätzung der Geschwindigkeit eines Fahrzeuges oder mehrerer miteinander verbundener Fahrzeuge

Method for estimating the velocity of a vehicle or an assembly of vehicles

(84) Etats contractants désignés:
**AT BE CH DE DK ES FI FR GB GR IE IT LI LU NL PT SE**

(30) Priorité: **27.11.1997 FR 9714908**

(43) Date de publication de la demande:
**02.06.1999 Bulletin 1999/22**

(73) Titulaire: **Alstom Transport S.A.**
**75116 Paris (FR)**

(72) Inventeurs:
• **Thomas, Jean-Luc**
**77810 Thomery (FR)**
• **Latteux, Patrick**
**77250 Veneux les Sablons (FR)**

• **Alacoque, Jean-Claude**
**69360 Communay (FR)**
• **Bornard, Guy**
**38338 Saint Isnier (FR)**
• **Alamir, Mazen**
**38120 Saint Egreve (FR)**

(74) Mandataire: **Moncheny, Michel et al**
**c/o Cabinet Lavoix**
**2 Place d'Estienne d'Orves**
**75441 Paris Cedex 09 (FR)**

(56) Documents cités:
**DE-A- 2 204 092**      **DE-A- 3 342 553**
**DE-A- 19 519 767**      **US-A- 4 164 872**

## Description

La présente invention concerne un procédé destiné à estimer la vitesse d'un véhicule, seul ou relié à d'autres véhicules, muni de roues pouvant glisser par rapport à leur chemin de roulement, lorsqu'elles transmettent un effort destiné à l'accélération ou la décélération dudit véhicule. Application notamment aux véhicules ferroviaires.

Un premier type de documents de l'art antérieur concerne les procédés de commande permettant d'améliorer l'adhérence d'une roue par rapport au chemin de roulement.

Un second type de documents de l'art antérieur concerne les procédés permettant d'estimer la vitesse d'un véhicule en particulier alors que toutes ses roues glissent par rapport au chemin de roulement.

Seul le second type de documents de l'art antérieur constitue l'état de la technique de l'invention, du fait que la présente invention porte sur un estimateur de vitesse de véhicule lorsque toutes les roues peuvent glisser simultanément par rapport au chemin de roulement.

Néanmoins, il apparaît intéressant d'analyser les deux types de documents de l'art antérieur de manière à mieux situer les caractéristiques de l'invention.

## 1 - Brevets portant sur l'amélioration de l'adhérence

### 1.1 - US 5 471 387 A 18 avril 1994 - Westinghouse Air Brake Company

Il s'agit d'un procédé destiné à réduire l'effort de freinage de manière dépendante de la décélération de l'essieu, lorsqu'un enrayage est détecté en freinage par comparaison :

- d'un seuil dépendant de la vitesse absolue de l'essieu,
- avec l'écart de vitesse résultant de l'intégration par rapport au temps de l'accélération de l'essieu, lorsque celle-ci dépasse un autre seuil pré-réglé.

L'écart de vitesse agissant en même temps que la décélération de l'essieu pour la réduction de l'effort de freinage.

Les entrées de cette commande sont l'accélération de l'essieu (12) et la vitesse de l'essieu (10). Il n'est pas fait mention de l'utilisation d'une vitesse de véhicule.

### 1.2 - US 5 390 990 A - 24 novembre 1993 - Hydro-Aire Division of Crane Company

Ce document décrit un système complet d'application et de répartition d'efforts entre les différents véhicules, attelés en convoi par une liaison présentant une élasticité non nulle, afin de limiter les réactions d'attelage lors de freinage.

Il s'agit donc de moduler l'effort appliqué à la roue par l'intermédiaire d'une électrovanne de freinage, en fonction de l'écart entre la vitesse mesurée de la roue (20) et une vitesse intitulée vitesse de référence, celle-ci étant générée de manière préférentielle à partir d'une commande de décélération issue d'un manipulateur (2-45).

### 1.3 - US 5 424 948 A 10 novembre 1993 - General Motors Corporation

Le procédé décrit maximise l'effort transmis par les roues d'une locomotive au rail à travers le coefficient d'adhérence, par une commande appliquée au régulateur de champ et de courant du moteur électrique de la locomotive utilisant les principes de la logique floue et dont les fonctions membres sont :

- l'erreur de glissement entre la consigne et la mesure
- la variation de glissement de la roue par rapport au rail
- une fonction stabilité calculée à partir de la variation du courant du moteur électrique et de l'erreur de glissement (équations 7 et 8).

Pour calculer le glissement, la vitesse des roues et celle de la locomotive par rapport au sol (3-37) sont mesurées séparément.

### 1.4 - EP 0 592 288 A1 - 6 octobre 1992 - Thomson-CSF

Le document porte sur la recherche de la commande qui maximise l'effort de freinage réalisé en fonction du glissement de la roue d'un véhicule par rapport à une piste, pour un type d'adhérence sollicitable en fonction du glissement connu à l'avance. Le procédé décrit, utilise un régulateur à logique floue dont les fonctions membres sont :

- la valeur du glissement de la roue par rapport à la piste
- la valeur de la dérivée de ce glissement par rapport au temps
- la valeur de la dérivée du couple réalisé par rapport au glissement

pour agir sur la pression du fluide de commande de freinage.

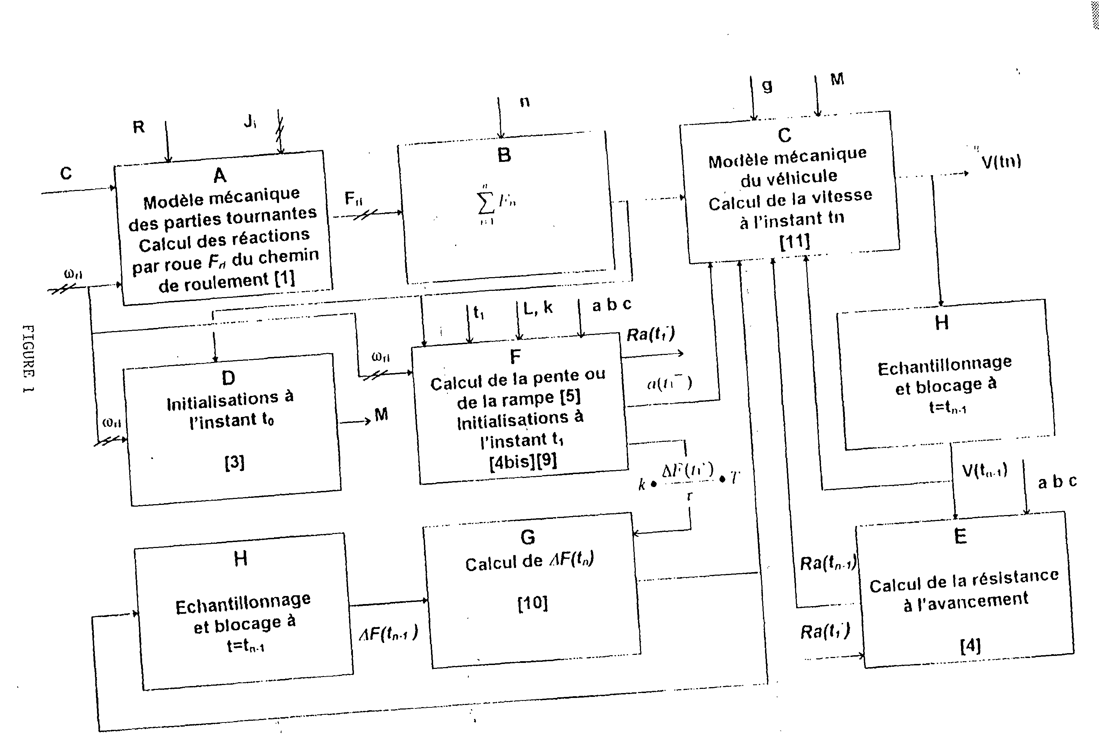

Le glissement est obtenu par différence entre deux vitesses toutes les deux mesurées (figure 9)

- la vitesse de la roue (46),
- la vitesse du véhicule appelée vitesse de référence (48).

### 1.5 - DE 4 309 183 A1 (FR 9 403 136) 22 mars 1993 - Siemens AG

Ce document porte sur un procédé destiné à rendre maximale la force de frottement qui dépend du glissement et apparaît au niveau de surfaces frottant l'une sur l'autre, moyennant l'utilisation d'un régulateur à logique floue dont les fonctions membres :

- la variation de la force de frottement
- la variation du glissement

permettent la correction du glissement à travers des règles exprimant la nécessaire égalité des signes :

- de la dérivée partielle de l'effort transmis par rapport au glissement, d'une part
- et de la variation du glissement, d'autre part.

Le calcul du glissement se fait par différence entre la vitesse mesurée de la roue et la vitesse mesurée du véhicule par des dispositifs non décrits.

### 2 - Brevets portant sur une estimation de la vitesse du véhicule

### 2.1 - EP 0 716 001 A1 30 novembre 1995 - Gec Alsthom Transport SA

Le procédé décrit porte sur l'estimation d'un majorant de la vitesse du véhicule, pour permettre la détermination d'un majorant de la distance parcourue par exemple par intégration de cette vitesse, en utilisant un automate à états finis dont les conditions de transition d'un état à l'autre sont définies et quantifiées. Un des états est caractérisé par le fait que les roues du véhicule patinent ou enrayent toutes en même temps. Dans ce cas, selon le procédé décrit, on calcule un majorant de la vitesse du véhicule en ajoutant en freinage, à la vitesse de la roue, un majorant du glissement estimé, selon la revendication 4, à 15%. Lors d'un blocage des roues, défini comme un autre état de l'automate, l'estimation du majorant de la vitesse n'est plus utilisé.

Il ne s'agit donc pas d'estimer la vitesse du véhicule y compris pendant un blocage transitoire des roues, mais d'en définir forfaitairement un majorant et les conditions de validité de ce calcul.

### 2.2 - US 5 453 942 A - 6 juin 1994 - Westinghouse Air Brake Company

Le procédé décrit estime la vitesse d'un véhicule ferroviaire en freinage à partir de la mesure des vitesses et des décélérations de quatre essieux pendant un enrayage prolongé. Pendant cette phase, le calcul incrémente, à période fixe, la mesure de la vitesse du véhicule, obtenue avant détection d'enrayage prolongé et mémorisée, d'une quantité égale. Cette quantité d'incrémentation est égale à la moyenne glissante des écarts, d'une mesure échantillonnée à période fixe, à la suivante, de la valeur de la vitesse minimum des quatre essieux, moyenne glissante obtenue sur 32 échantillons et elle-même mémorisée au moment de la détection de l'enrayage prolongé.

La vitesse du véhicule avant détection de l'enrayage prolongé est obtenue par le calcul de la vitesse minimum des quatre essieux lors d'un freinage avant la détection de l'enrayage prolongé.

En résumé, le procédé décrit utilise un algorithme d'estimation de la vitesse d'un véhicule pendant un enrayage prolongé, basé sur l'extrapolation de la vitesse de l'essieu ayant la vitesse minimum, extrapolation faite en supposant constante la décélération de cet essieu. La valeur de la vitesse et de la décélération sont les valeurs respectivement prises par ces deux grandeurs pendant le freinage et avant l'enrayage prolongé, valeurs mémorisées après traitement.

### 2.3 - DE 3 837 909 - 4 novembre 1988 - Karl Hahn, dipl.-ing., Berlin

Le procédé décrit l'estimation de la vitesse d'un véhicule en traction et en freinage, à partir de la mesure de la vitesse du moteur par un codeur incrémental. Selon ce procédé, on ajoute ou on retranche à cette vitesse, selon que l'on freine ou que l'on tractionne respectivement, une valeur estimée du glissement absolu, en valeur absolue, de la roue par rapport au rail.

Cette valeur de glissement est déduite de deux réseaux de courbes établis a priori donnant l'effort réalisé en fonction du glissement relatif et de la vitesse absolue du véhicule. Chacun de ces réseaux décrivant une zone de fonctionnement :

- fonctionnement stable ou zone de pseudo-glissement où une augmentation du glissement relatif correspond à une augmentation de l'effort transmis au rail,
- fonctionnement instable ou zone de patinage ou d'enrayage où une même augmentation du glissement relatif conduit au contraire à une diminution de l'effort transmis au rail.

Le choix du réseau correspondant à l'une ou à l'autre zone étant fait en fonction de la valeur de l'effort de consigne, de l'effort réalisé et de la vitesse du véhicule.

L'estimation de la vitesse du véhicule s'appuie donc sur une connaissance *a priori* et constante, de la caractéristique d'adhérence du véhicule. En réalité cette caractéristique dépend très fortement de nombreux facteurs dont le principal est l'état de la voie et ses variations ne sont pas prévisibles.

### 2.4 - EP 0 499 947 A1 -13 février 1991 - KNORR-BREMSE AG

Le procédé décrit l'estimation de la vitesse d'un véhicule, selon l'état du système, à partir du calcul de la vitesse maximum filtrée des roues, avec la logique suivante :

- si la vitesse estimée est inférieure à la vitesse maximum filtrée, la nouvelle estimation de vitesse est alors prise égale à la vitesse maximum filtrée par ajout d'une correction,
- si la vitesse estimée est supérieure à la vitesse maximum filtrée et que l'on ne constate pas par ailleurs de blocage de roue, on décrémente la valeur estimée d'une valeur dal,
- si la vitesse estimée est supérieure à la vitesse maximum filtrée et que l'on constate un retour à l'adhérence après un blocage et une temporisation, la nouvelle estimation de vitesse est alors prise égale à la vitesse maximum filtrée par calcul d'une correction.

Il s'agit donc d'une estimation, itérative et récursive de la vitesse d'un véhicule en freinage, basée sur des corrections successives d'une mesure de vitesse maximum filtrée des roues.

### 3 - Document US 5 453 942 A de Westinghouse Air Brake Company

Nous ne retiendrons pas de l'état de la technique cité ci-dessus les documents portant sur un système complet d'anti-patinage ou d'anti-enrayage, lesquels ne décrivent pas la manière dont est mesurée la vitesse des véhicules lorsque toutes les roues du véhicule patinent ou enrayent.

Nous retiendrons donc le document US 5 453 942 lequel porte sur l'estimation de la vitesse d'un véhicule lors d'une perte d'adhérence.

Il est également possible de retenir le document EP 81 017 056 de Faiveley, « Procédé pour mesurer la vitesse d'un véhicule sur voie ferrée et dispositif pour sa mise en oeuvre ».

### 3.1 - US 4 164 872 - Siemens

Ce document décrit une méthode pour déterminer le patinage des roues d'un véhicule à propulsion sans essieux auxiliaires. Cette méthode comprend une étape de détermination de la roue ayant la plus grande vitesse et de la roue ayant la vitesse la plus lente, une étape de sélection de la roue ayant la vitesse la plus rapide dans le cas d'une commande de freins, de la roue ayant la vitesse la plus lente dans les autres cas, une étape dans laquelle une vitesse du véhicule simulée est déterminée en fonction de la vitesse de la roue sélectionnée, puis une étape dans laquelle la vitesse simulée est comparée avec la vitesse des roues mesurée, la différence entre ces deux vitesses étant convertie en un signal pour influencer la commande frein sur les essieux. Ce document ne décrit pas le mode d'estimation de la vitesse simulée du véhicule.

### 3.2 - DE 195 19 767 - Knorr-Bremse Système

Ce document divulgue un procédé de détermination de la vitesse de translation d'un véhicule automobile pour un dispositif d'anti-patinage/anti-blocage dans lequel la vitesse linéaire des roues est mesurée et comparée à des vitesses pré-enregistrées. Ce procédé d'estimation de la vitesse permet uniquement de déterminer la vitesse translative du véhicule.

### 4. Description de l'état de la technique

Comme indiqué précédemment, l'invention concerne un procédé destiné à estimer la vitesse d'un véhicule, seul ou relié à d'autres véhicules, muni de roues pouvant glisser par rapport à leur chemin de roulement, lorsqu'elles transmettent un effort destiné à l'accélération ou la décélération dudit véhicule. Application notamment aux véhicules ferroviaires.

Lorsque les roues d'un véhicule transmettent un effort au chemin de roulement, elles le font par l'intermédiaire d'un coefficient de frottement qui dépend de nombreux facteurs dont les dimensions géométriques des roues, la nature du matériau en contact avec le chemin de roulement, la nature du chemin de roulement et son état, la présence, l'état et la nature de solides ou de liquides entre la roue et le chemin de roulement, le poids appliqué par le véhicule sur la roue en dynamique, du glissement de la roue par rapport au chemin de roulement, de la température,....Ces facteurs peuvent varier rapidement de manière imprévisible, dans le temps ou l'espace, provoquant une perte d'adhérence totale ou partielle et donc un glissement de la roue par rapport à son chemin de roulement. De plus, il est nécessaire de provoquer et de maintenir ce glissement... pour accroître la transmission de l'effort entre la roue et son support. L'effort transmis à travers le coefficient de frottement roue/support lorsque la roue glisse par rapport à ce support est producteur d'énergie laquelle améliore le coefficient de frottement. La gestion de ce glissement se fait selon des procédés connus permettant de maximiser l'effort transmis en fonction du glissement. Les documents US 5 424 948, EP 0 592 288 et DE 4 309 183, cités ci-dessus, décrivent de tels procédés.

Le glissement relatif de chacune des roues, que l'on conviendra d'appeler ci-après glissement, est défini comme l'écart des vitesses linéaires entre une roue et le véhicule, écart rapporté à la vitesse du véhicule. Ce glissement est donc positif ou nul en traction. La connaissance de ce glissement passe donc par la mesure de la vitesse des roues transmettant un effort et par la connaissance de la vitesse du véhicule par rapport au chemin de roulement, que celui-ci soit fixe par rapport à un repère galiléen ou lui-même mobile.

La connaissance de la vitesse du véhicule par rapport à son chemin de roulement, ci-après nommé référentiel, a de nombreuses autres applications que l'optimisation de la transmission des efforts d'accélération ou de décélération. Ainsi, il est souvent nécessaire de connaître avec précision la vitesse d'un véhicule par rapport à son référentiel qui peut être le sol par exemple, pour l'afficher en cabine du conducteur, pour l'utiliser comme retour de grandeur asservie, pour la mémoriser à des fins de contrôle, pour limiter la vitesse du véhicule sur certaines parties du parcours ou en fonction de la distance le séparant d'un véhicule le précédent, ou pour connaître, en intégrant la vitesse par rapport au temps, la distance parcourue entre des balises de recalage en position (odométrie).

Les solutions existantes sont imparfaites. Ainsi il est possible d'utiliser un radar à effet Doppler, lequel est coûteux et présente des dysfonctionnements en présence de neige ou de sable. Ce système ne peut en général pas être utilisé seul afin d'assurer la sécurité et la disponibilité du véhicule. Lorsqu'il est utilisé, il est couplé avec d'autres systèmes fonctionnant sur des principes différents.

Une deuxième solution réside dans l'utilisation d'un capteur de vitesse sur une roue ou un essieu, chargé pour éviter les décollements, non moteur et de plus sous-freiné pour éviter tout glissement par rapport au référentiel. Cette solution n'est pas toujours possible du fait que, pour des raisons d'accroissement des performances cinématiques des véhicules, on ne peut pas ne pas appliquer le maximum d'effort, de freinage en particulier, sur toutes les roues du véhicule. Il en est ainsi de l'automobile, des bus, des tramways, des trains à grande vitesse, des locomotives,

D'autres solutions permettent d'estimer la vitesse du véhicule par rapport à son référentiel, à partir des mesures de vitesse des roues, avec transmission d'effort et en présence d'un glissement de la roue par rapport au référentiel du véhicule.

Un des procédés connus est décrit dans le document US 5 453 942, Wheel spin speed processing system for multiple-axle railway vehicles, cité ci-dessus. Ce procédé estime la vitesse d'un véhicule ferroviaire en freinage à partir de la mesure des vitesses et des décélérations de quatre essieux pendant un enrayage prolongé. Pendant cette phase, le calcul incrémente, à période fixe, la mesure de la vitesse du véhicule, obtenue avant détection d'enrayage prolongé et mémorisée, d'une quantité égale. Cette quantité d'incrémentation est égale à la moyenne glissante des écarts, d'une mesure échantillonnée à période fixe, à la suivante, de la valeur de la vitesse minimum des quatre essieux, moyenne glissante obtenue sur trente deux échantillons et elle-même mémorisée au moment de la détection de l'enrayage prolongé.

La vitesse du véhicule avant détection de l'enrayage prolongé est obtenue par le calcul de la vitesse minimum des quatre essieux lors d'un freinage avant la détection de l'enrayage prolongé.

En résumé, le procédé décrit utilise un algorithme d'estimation de la vitesse d'un véhicule pendant un enrayage prolongé, basé sur l'extrapolation de la vitesse de l'essieu ayant la vitesse minimum, extrapolation faite en supposant constante la décélération de cet essieu. La valeur de la vitesse et de la décélération sont les valeurs respectivement prises par ces deux grandeurs pendant le freinage et avant l'enrayage prolongé, valeurs mémorisées après traitement.

Ce procédé, comme d'autres procédés décrits dans d'autres inventions ou dans la littérature spécialisée, propose une extrapolation de la mesure de la vitesse d'un véhicule pendant la phase de perte d'adhérence caractérisée par le glissement de toutes les roues, à partir d'informations cinématiques mémorisées au début de cette phase et extraites de la vitesse de toutes les roues du véhicule. Ces estimations souffrent dans la pratique des limitations suivantes que la présente invention propose d'éviter :

- le procédé décrit, calcule la vitesse minimum parmi les vitesses de quatre essieux et la décélération de l'essieu possédant cette vitesse minimum. Il n'est fait aucune utilisation dans le procédé, des mesures de vitesse ou d'accélération des essieux qui présentent une vitesse supérieure et qui cependant participent à la transmission de l'effort et donc à la variation de la vitesse du véhicule. Ces informations, utiles pour estimer la vitesse du véhicule pendant le glissement de tous les essieux, doivent donc toutes être conservées et traitées individuellement pour améliorer la précision de l'estimation. D'autres procédés calculent les vitesses minimum et maximum et n'utilisent que ces deux informations de vitesse, de même pour les accélérations. Elles souffrent donc des mêmes limitations.

- le procédé décrit, n'utilise pas les informations connues, ou susceptibles d'être mesurées ou estimées sur l'état du véhicule et influençant, sa cinétique, comme par exemple l'inertie des masses tournantes représentées par les roues, les essieux, les réducteurs, les arbres de transmission, les disques de frein, les rotors des moteurs électriques, ou encore le poids du véhicule qui varie souvent de +/- 30% selon son état de charge, ou bien l'effort réalisé par le moteur et le dispositif de freinage.

Il en résulte que les réglages de tels estimateurs sont difficiles du fait qu'ils utilisent des variables non directement interprétables physiquement ou fonctionnellement, comme des seuils sur des vitesses ou des accélérations.

Une autre conséquence est que les réglages sont invariants selon les conditions d'exploitation et ne peuvent donc pas être optimisés pour tous les cas de fonctionnement. Il en résulte donc une perte importante de précision de l'estimation dans tous les cas différant, par un ou plusieurs paramètres, du mode de fonctionnement dans lequel a été fait le réglage initial.

- enfin, l'estimation de la vitesse ne tient pas compte de la variation de l'état du chemin de roulement pendant le glissement et donc de l'évolution du coefficient de frottement pendant la transmission de l'effort. Or le coefficient de frottement varie rapidement dans de grandes proportions. Ainsi, dans le cas du rail, le coefficient d'adhérence défini comme le rapport entre : la réaction du rail au couple transmis par la roue, et le poids appliqué sur cette même roue, peut varier de 45% à quelques pourcents, du fait de la pollution atmosphérique, du dépôt d'huiles de moteur ou de débris végétaux, mais aussi du fait même du glissement avec frottement qui change les conditions locales du contact roue/rail. L'estimation est donc faussée par tous les changements de condition de glissement.

## 5 - Description de l'invention

La présente invention est telle que caractérisée ci-après et se propose de résoudre le problème technique consistant à éviter au mieux tous les inconvénients cités ci-dessus pour améliorer la précision de l'estimation de vitesse du véhicule pendant la phase de glissement.

On notera d'abord que la seule connaissance précise et constante que l'on possède sur le contact entre la roue et son chemin de roulement quel que soit son état et la valeur du glissement (de 0 à 100%) est le fait que la force motrice, ou retardatrice, Fr est, dans tous les cas, intégralement transmise de la roue au véhicule à travers le coefficient de frottement par l'intermédiaire de la réaction du rail. L'énergie mécanique ou thermique apparaissant dans le contact est due à l'écart de vitesse entre les points d'application de la force, d'une part, et de la réaction, d'autre part.

Soit $J_i$ l'inertie des masses tournantes, telles que définies plus haut, entraînées avec la roue numéro i du véhicule, $V_{ri}$ la vitesse linéaire mesurée de cette roue, $\omega_i$ sa vitesse angulaire et R son rayon. Soit par ailleurs C le couple moteur (positif), ou retardateur (négatif), appliqué à cette roue par le moteur ou le frein, et $C_{ri}$ le couple résistant appliqué à la roue i par la réaction du rail $F_{ri}$ à travers le frottement résultant du glissement.

Il arrive fréquemment que les roues ne soient pas indépendantes vis à vis de l'effort appliqué. Lorsque plusieurs roues sont liées rigidement, par exemple par un essieu et/ou par un arbre de transmission, il convient de considérer alors que l'indice i s'applique à l'ensemble des roues liées et donc tournant à la même vitesse $V_{ri}$. Ji désigne alors l'inertie totale et $C_{ri}$ le couple résistant total appliqué au groupe de roues.

Dans ces conditions, il est possible d'écrire :

$$J_i \bullet \frac{d\omega_n}{dt} = C - C_n$$

avec :

$$\omega_n = \frac{V_n}{R}$$

$$F_n = \frac{C_n}{R}$$

et donc de manière équivalente :

$$F_n = \frac{C}{R} - \frac{1}{R^2} \bullet J_i \bullet \frac{dV_n}{dt} \qquad [1]$$

Il apparaît donc clairement à ce stade de la description, que $F_{ri}$ peut être calculée exactement à partir de la connaissance de C, R, $J_i$ et de la mesure de la vitesse des roues par dérivation temporelle ou filtrage passe-haut.

En effet la valeur de R et $J_i$ sont des éléments connus du concepteur du véhicule, ou mesurables ou bien calculables simplement. C peut être mesuré en continu lorsqu'il s'agit de moteur électrique à partir des grandeurs électriques telles que tension, courant et/ou flux magnétique de la machine. Lorsqu'il s'agit de moteurs thermiques il peut être estimé à l'aide de mesure de pression, de vitesse, de température, de consommation. De même lorsqu'il s'agit d'éléments hydrauliques, par des mesures de pression et de débit, ou par tout autre moyen connu. Dans le cas où l'on ne disposerait pas d'instruments pour mesurer le couple réellement appliqué, une bonne estimation peut être faite de ce couple en utilisant la consigne de couple issue du conducteur ou des automatismes. Ainsi, pour un véhicule routier avec un moteur thermique fonctionnant avec une température ambiante connue, une bonne estimation du couple est fournie par la position de la pédale de l'accélérateur du véhicule. Dans le cas du freinage pneumatique d'un métro, une bonne estimation de la valeur du couple de freinage peut être fournie par la pression dans le cylindre de frein ou à défaut par la consigne de freinage fournie par le manipulateur du conducteur et transmise en ligne de train.

Par ailleurs, sur un véhicule la force de réaction appliquée à la roue ou au groupe de roues participe à l'accélération ou à la décélération du véhicule. Il est donc possible d'écrire sur un véhicule isolé :

$$M \bullet \frac{dV}{dt} = Mg\sin(\alpha) + \sum_{i=1}^{n} F_n - Ra \qquad [2]$$

avec :

M : représentant la masse du véhicule,
V : étant la vitesse du véhicule
g : l'accélération de la pesanteur (g= 9,81 m/s$^2$)
$\alpha$ : représentant l'angle du chemin de roulement avec l'horizontale du lieu avec la convention de signe suivante :
$\alpha$ est positif si la pente tend à accélérer le véhicule
n : : nombre de groupe de roues indépendantes sur le véhicule
Ra : résistance à l'avancement

L'extension de cette formule à des véhicules associés en rame est immédiate lorsque l'on considère que n est le nombre de roues indépendantes de l'ensemble ainsi formé.

Il faut alors noter que la plupart des grandeurs figurant dans cette relation sont des grandeurs connues ou mesurables.

*5.1 - Estimation de la masse*

La masse du véhicule à vide est connue. Cette masse peut être mesurée en charge, par des dispositifs connus, du type correcteurs mécaniques à la charge utilisés pour les circuits de freinage pneumatiques ou hydrauliques des véhicules, ou par des mesures de pression dans les suspensions du véhicule lorsque celles-ci sont pneumatiques ou hydrauliques. Lorsque de tels dispositifs n'existent pas ou lorsqu'ils sont inopérants, comme par exemple pour les locomotives de fret où la masse à utiliser est celle du convoi complet et non pas celle de la locomotive uniquement, il est alors facile d'estimer la masse du convoi lors d'un démarrage, juste après sa formation qui se fait toujours sur terrain plat ($\alpha=0$), à partir de la relation [2], en notant qu'à basse vitesse la résistance à l'avancement est négligeable. La relation [2] devient donc dans ce cas :

$$M \bullet \left( \frac{dV}{dt} \right)_{t=t0} = \sum_{i=1}^{n} F_n$$

La relation [1] qui est toujours vérifiée fournit la valeur de :

$$\sum_{i=1}^{n} F_n$$

à partir de la mesure de la vitesse des roues et du calcul de leur accélération.

Si de plus, pendant les premiers instants du démarrage on s'assure qu'aucune roue ne glisse par rapport au rail, par exemple en vérifiant, selon des procédés connus dont le plus simple est de mettre en évidence qu'aucune roue ne présente une accélération supérieure à un seuil d'accélération acceptable pour un tel convoi, par exemple $1 m/s^2$, on pourra donc dans ce cas, considérer que la vitesse linéaire des roues est égale et est identique à celle de la locomotive. Selon les moyens utilisés pour obtenir la mesure de la vitesse des roues, le résultat de mesure est plus ou moins précis et on utilisera pratiquement une valeur moyenne des signaux de mesure des vitesses des roues, ou la valeur maximale, pour l'assimiler à la vitesse du convoi, et donc calculer par exemple à partir de la vitesse moyenne, mais sans que cela limite la portée de l'invention, l'accélération du convoi :

$$\frac{dV(t)}{dt} = \frac{d}{dt} \left( \frac{\sum_{i=1}^{n} V_n(t)}{n} \right) \quad \text{pour } t=t_0$$

En définitive, il est possible d'estimer la valeur de la masse du convoi au démarrage puis de conserver cette valeur jusqu'au changement de sa configuration par le calcul suivant :

$$M = n \bullet \frac{\sum_{i=1}^{n} F_n}{\sum_{i=1}^{n} \left( \frac{dV_n(t)}{dt} \right)_{t=t0}} \quad [3]$$

*5.2 - Estimation des résistances à l'avancement*

Certains véhicules peuvent atteindre des vitesses importantes pour lesquelles les résistances à l'avancement par exemple dans l'air ne deviennent plus négligeables devant les efforts utilisés pour leur accélération ou leur freinage. La valeur de ces efforts retardateurs dépend de paramètres de construction du véhicule comme sa section droite et son coefficient de pénétration aérodynamique (Cx). Les résistances à l'avancement sont en général modélisées par des polynômes en fonction de la vitesse du véhicule. Ainsi, à titre d'exemple :

$$Ra(t) = a - b \cdot V(t) + c \cdot V^2(t) \qquad [4]$$

où a, b et c sont des coefficients connus positifs.

Le calcul de Ra est donc très simple en temps réel, tant qu'une roue au moins du véhicule ne glisse pas par rapport à son chemin de roulement. Soit j le numéro de cette roue. Le calcul, à l'instant $t_1^-$ précédant immédiatement le glissement de la dernière roue par rapport au chemin de roulement, de la résistance à l'avancement se fait simplement par :

$$Ra(t_1^-) = a + b \cdot V_r(t_1^-) + c \cdot V_r(t_1^-)^2 \qquad [4 \text{ bis}]$$

Dans la pratique, la mesure des $V_{rj}$ est faite en permanence, à intervalles de temps réguliers, et $V_r(t_1^-)$ est mémorisée au moment ou l'on détecte que la dernière roue roue j, qui ne glissait pas jusqu'alors, commence à glisser

$$V_r(t_1^-) = V_{rj}(t_1^-)$$

*5.3 - Estimation de la pente ($\alpha > 0$) ou de la rampe ($\alpha < 0$)*

L'estimation de la pente ou de la rampe peut se faire de la même manière que pour la résistance à l'avancement, à l'instant $t_1^-$, juste avant que la dernière roue j ne commence à glisser et sa valeur mémorisée pendant tout le temps où toutes les roues du véhicule glissent, par le calcul suivant utilisant la relation [2] à l'instant $t_1^-$ :

$$\alpha(t_1^-) = Arc\sin\left(\frac{1}{Mg}\left[M \bullet \left(\frac{dV_r(t)}{dt}\right)_{t=t_1^-} - \sum_{i=1}^{n} F_n + Ra(t_1^-)\right]\right) \qquad [5]$$

Relation dans laquelle :

M est mesuré ou estimé à l'instant $t_0$ selon la relation [3]
g est une constante

$$\left(\frac{dV_r(t)}{dt}\right)_{t=t_1^-}$$

est calculé à l'instant $t_1^-$ à partir de la mesure de la vitesse de la roue j

$$\sum_{i=1}^{n} F_n$$

est calculé en permanence à partir de la relation [1]
$Ra(t_1^-)$ est calculé à partir de la relation [4 bis]

*5.4 - Estimation de la vitesse du véhicule pendant le glissement de toutes les roues*

L'estimation de la vitesse du véhicule à partir du temps $t_1^-$ devient alors possible à partir de l'équation [2] en y substituant les termes mesurés ou estimés par les relations [1], [3], [4] et [5].

$$M \bullet \frac{dV(t)}{dt} = Mg \sin(\alpha(t_1^-)) + \sum_{i=1}^{n} F_{ri}(t) - Ra(t) \qquad [6]$$

Cette formulation suppose que la déclivité reste constante pendant la phase de glissement de toutes les roues, hypothèse valide lorsque l'on considère que les distances parcourues par le véhicule pendant ce type de fonctionnement restent limitées à quelques centaines de mètres.

Si toutefois cette hypothèse n'était pas vérifiée pour certaines applications où l'on recherche une meilleure précision sur de grandes distances d'accélération ou de décélération à glissement constant de toutes les roues transmettant un effort, il suffirait de réduire l'effort, à intervalles périodiques, jusqu'à ce que au moins une roue retrouve son adhérence complète, pour permettre une remise à jour de la valeur de la déclivité. Les intervalles de temps pouvant être inversement proportionnels à la vitesse estimée du véhicule pour que la distance parcourue pendant ce laps de temps soit sensiblement identique et bornée.

Une première solution consiste à considérer que Ra(t) est lui aussi constant entre deux réactualisations de l'estimation de la pente et donc égale à Ra($t_1^-$). La vitesse se déduit alors de la relation suivante, dérivée de l'égalité [6] :

$$V(t) = \frac{1}{M} \bullet \int_{t_1}^{t} \left[ Mg \sin(\alpha(t_1^-)) + \sum_{i=1}^{n} F_{ri}(t) - Ra(t_1^-) \right] dt + V_r(t_1^-) \qquad [7]$$

Une solution plus précise est de discrétiser l'équation [6] pour calculer l'estimation de la vitesse à des intervalles de temps proches et d'utiliser pour le calcul de Ra la valeur de ce terme à l'instant de calcul précédent où l'on connaît la vitesse du véhicule :

Cette estimation est donc simplement exprimée par la relation de récurrence suivante :

$$V(t_n) = V(t_{n-1}) - \Delta V(t_n)$$

dans laquelle $\Delta V(t_n)$ est calculée par la relation [6] discrétisée :

$$V(t_n) = V(t_{n-1}) + \frac{T}{M} \bullet \left[ Mg \sin(\alpha(t^-)) + \sum_{i=1}^{n} F_{ri}(t_n) - Ra(t_{n-1}) \right] \qquad [8]$$

où :

$$T = t_n - t_{n-1}$$

Les premiers termes pour n= 1 de cette relation de récurrence sont :

$$V(t_{n-1}) = V_r(t_1^-)$$

et:

$$Ra(t_{n-1}) = Ra(t_1^-)$$

*5.5 - Corrections transitoires*

Afin d'améliorer la précision de l'estimation de la vitesse du véhicule pendant la phase où toutes les roues glissent par rapport au chemin de roulement, il est nécessaire de corriger la relation [8] pour tenir compte du fait que la détection de glissement de la dernière roue se fait avec un retard important du fait que la mise en glissement des roues se fait de manière brutale.

Par ailleurs, il est nécessaire d'assurer la continuité de l'accélération ou de la décélération du ou des véhicules, sur une variation brutale de l'adhérence se propageant sous toutes les roues du véhicule ou du convoi pendant un temps de réponse caractéristique du système proportionnel à :

$$\tau = \frac{L}{V(t_1^-)}$$

où L représente la longueur du convoi des véhicules roulant à la vitesse estimée $V(t_1^-)$.

Il convient de rajouter le terme dont la valeur initiale est :

$$\Delta F(t_1^-) = \sum_{i=1}^{n} F_n(t_i^-) - \sum_{i=1}^{n} F_{ri}(t_i^-)$$

soit, en remlaçant le deuxième terme du second membre de l'égalité ci-dessus par son expression tirée de la relation [2] :

$$\Delta F(t_1^-) = \sum_{i=1}^{n} F_n(t_i^-) - Mg\sin(\alpha(t_1^-)) - Ra(t_1^-) - M \bullet \left(\frac{dV(t)}{dt}\right)_{t=t_1^-} \qquad [9]$$

et dont la valeur tend progressivement vers 0 pendant le temps $\tau$.

En définitive cette correction est donnée par la formule de récurrence suivante, où k est un coefficient inférieur à 1, prenant en compte le retard de détection lors d'une dégradation rapide du coefficient d'adhérence :

$$\Delta F(t_n) = \Delta F(t_{n-1}) - k \bullet \frac{\Delta F(t_1^+)}{\tau} \bullet T \qquad \text{avec : } k<1 \qquad\qquad [10]$$

tant que la valeur de $\Delta F$ ne passe par 0.

La valeur initiale pour n=1 de $\Delta F$ étant donnée par [9].

*5.6 - Calcul final*

En définitive l'estimation de la vitesse du véhicule lorsque l'ensemble de ses roues transmettant un effort glissent par rapport au chemin de roulement, peut-être exprimée selon l'invention par la relation récurrente suivante :

$$V(t_n) = V(t_{n-1}) + \frac{T}{M} \bullet \left[ Mg\sin(\alpha(t_1^-)) + \sum_{i=1}^{n} F_n(t_n) + \Delta F(t_n) - Ra(t_{n-1}) \right]$$

$$[11]$$

avec :

*V(t)* : vitesse du véhicule à l'instant t

*T* : période de calcul. $T = t_n - t_{n-1}$

$$F_n = \frac{C}{R} - \frac{1}{R^2} \bullet J_i \bullet \frac{dV_n}{dt} \qquad\qquad [1]$$

$V_n$ : vitesse de la roue, ou du groupe de roues dépendantes, n° i

*R* : rayon de roue

*C* : couple moteur (>0) ou retardateur (<0)

$J_i$ : Inerties des masses tournantes liées à la roue ou au groupe de roues liées

*M* : Masse du véhicule ou de l'ensemble de véhicule gérés par le même estimateur de vitesse et calculée par :

$$\bar{M} = n \bullet \frac{\sum_{i}^{n} F_n}{\sum_{i}^{n} \left( \frac{dV_n(t)}{dt} \right)_{t=t0}} \qquad [3]$$

*n* : nombre de groupes de roues indépendantes

$t_0$ : instant du premier démarrage sans glissement

*g* : accélération de la pesanteur : 9,81 m/s$^2$

$$\alpha(t_1^-) = Arc\sin(\frac{1}{Mg}\left[ M \bullet \left( \frac{dV_r(t)}{dt} \right)_{t=t_1^-} - \sum_{i}^{n} F_n(t_1^-) + Ra(t_1^-) \right]) \qquad [5]$$

$t_1^-$ : instant précédant l'instant t1 de glissement de toutes les roues

$$Ra(t_1^-) = a - b \bullet V_r(t_1^-) + c \bullet V_r(t_1^-)^2 \qquad [4\ bis]$$

*a*, *b*, *c* : coefficient définissant la résistance à l'avancement du véhicule

$V_r(t_1^-)$ : vitesse de la dernière roue ne glissant pas mémorisée à l'instant $t_1^-$

$$\Delta F(t_n) = \Delta F(t_{n-1}) - k \bullet \frac{\Delta F(t_1^+)}{\tau} \bullet T \qquad [10]$$

$$\Delta F(t_1^-) = \sum_{i=1}^{n} F_n(t_1^-) + Mg\sin(\alpha(t_1^-)) - Ra(t_1^-) - M \bullet \left( \frac{dV(t)}{dt} \right)_{t=t_1^-} \qquad [9]$$

$$\tau = \frac{L}{V(t_1^-)}$$

*L* : longueur du convoi

$$Ra(t_{n-1}) = a + b \bullet V(t_{n-1}) + c \bullet V^2(t_{n-1}) \qquad [4]$$

### 6 - Description du procédé

Le synoptique suivant résume le procédé d'estimation de la vitesse du véhicule à partir de la mesure des vitesses des roues et de la valeur du couple moteur ou retardateur appliqué, lorsque toutes les roues glissent par rapport au chemin de roulement.

Le procédé consiste à calculer dans un premier temps à l'aide du module A, les efforts transmis au chemin de roulement à partir des équations de la mécanique des parties tournantes [1] et de la connaissance des paramètres mécaniques, pour chaque roue indépendante ou pour un groupe de roues liées mécaniquement.

La connaissance des efforts élémentaires transmis permet ensuite, par sommation sur l'ensemble des roues ou groupes de roues indépendantes, de calculer par le module B, l'effort total transmis au chemin de roulement.

Une valeur estimée de la vitesse du véhicule à tout instant peut alors être calculée par le module C, à partir de l'effort total appliqué au chemin de roulement par le modèle mécanique du véhicule [11] à partir de la connaissance de sa masse.

Cette masse peut être variable selon la charge du véhicule et il est alors plus précis de la mesurer par la hauteur des suspensions ou la pression dans les coussins de suspension secondaire. Dans le cas où l'on ne dispose pas de cette mesure, il est toujours possible d'estimer cette masse, par le module D, à partir de la mesure de l'accélération du véhicule en terrain plat alors qu'aucune roue ne glisse par rapport à son chemin de roulement [3].

Il est possible, de plus, de tenir compte de la résistance à l'avancement en fonction de la vitesse du véhicule, par le module E, à partir de la connaissance des caractéristiques du véhicule et de l'estimation de sa vitesse résultant du pas de calcul précédent $V(t_{n-1})$ à partir de la relation [4].

Pour améliorer la précision de l'estimateur de vitesse lorsque le véhicule est amené à franchir des pentes ou des rampes, on prend en compte la valeur de la pente ou de la rampe calculée par le module F, à l'instant de calcul précédant le départ en glissement de la dernière roue encore adhérente, selon la relation [5].

La prise en compte de la propagation d'une variation brutale de l'adhérence sous les roues du véhicule et sous les roues du convoi, ainsi que la compensation du retard de détection du glissement de l'ensemble des roues dans ce cas, est réalisée par l'équation [10] dans le module de calcul G.

Les échantillonneurs bloqueurs H, permettent de mémoriser une valeur calculée à l'instant précédent $t_{n-1}$ pour l'utiliser dans le calcul du pas de calcul suivant $t_n$.

Enfin le bloc de calcul F, permet aussi l'initialisation des calculs récurrents dont les valeurs initiales sont : *Ra* $(t_1^-)$ et $\Delta F(t_1^+)$, à partir d'un signal de détection de glissement de toutes les roues fourni à l'instant $t_1^+$, dont l'élaboration simple et connue n'est pas décrite.

Il apparaît maintenant clairement que l'estimateur de vitesse du train utilise les mesures :

- de chacune des vitesses des roues indépendantes mécaniquement transmettant un effort,
- du couple moteur ou retardateur appliqué,
- de la masse du véhicule lorsque cette mesure est disponible.

De plus, l'estimateur utilise les informations disponibles caractéristiques du véhicule :

- le rayon $R$ des roues,
- l'inertie $J_i$ des masses tournantes liées à chaque roue indépendante,
- le nombre n de roues indépendantes par véhicule ou par association de véhicules,
- la longueur L du véhicule ou du convoi,
- les coefficients a, b et c permettant le calcul de la résistance à l'avancement en fonction de la vitesse du véhicule,
- la masse du véhicule si elle peut être considérée comme constante.

Enfin, l'estimateur calcule ou estime des informations physiques utiles pour améliorer la précision de l'estimation de vitesse lorsque ces informations ne sont pas disponibles directement comme:

- la masse du véhicule, si elle n'est ni mesurée, ni constante,
- la résistance à l'avancement,
- la pente ou la rampe,
- la variation d'adhérence rencontrée par le véhicule sur le chemin de roulement et sa propagation sous les roues du véhicule.

### Revendications

1. Procédé d'estimation de la vitesse d'un véhicule ou d'une association de véhicules, à partir de la mesure des vitesses des roues mécaniquement indépendantes, pendant le glissement de toutes les roues par rapport au chemin de roulement, **caractérisé en ce qu'**il comporte les étapes suivantes :

   - mesure de la vitesse de la roue n°i,
   - estimation de la force de réaction du rail sur la roue n° i ou de la réaction du chemin de roulement audit effort moteur ou retardateur appliqué à la roue n°i, à partir de la mesure de la vitesse de la roue n° i,
   - mesure de la masse du véhicule,
   - estimation de la résistance à l'avancement exercée sur le véhicule avant que toutes les roues ne commencent à glisser,

- calcul de la pente ou de la rampe du chemin de roulement avant que toutes les roues ne commencent à glisser, à partir de la mesure de la vitesse avant glissement de la dernière roue se mettant à glisser,
- estimation de la vitesse du ou des véhicules V (t) à partir de la relation :

$$M \bullet \frac{dV(t)}{dt} = Mg\sin\left(\alpha(t_1^-)\right) + \sum_{i=1}^{n} F_{ri}(t) - R_a(t)$$

dans laquelle :

M désigne la masse du véhicule ou du groupe de véhicules,
g désigne l'accélération de la pesanteur,
$\alpha(t_1^-)$ désigne la pente ou la rampe du chemin de roulement,
$F_{ri}$t) désigne la force de réaction du rail ou réaction du chemin de roulement à l'effort moteur retardateur appliqué à la roue n°i,
Ra(t) désigne la résistance à l'avancement, et
n désigne le nombre de groupes de roues indépendantes.

2. Procédé selon la revendication 1, **caractérisé en ce qu'**il comporte en outre une étape de discrédisation de la relation d'estimation de la vitesse du véhicule, la valeur de vitesse étant obtenue au moyen de la relation récurrente suivante :

$$V(tn) = V(tn-1) + \frac{(tn-tn-1)}{M} \bullet \left[ Mg\sin\left(\alpha(t_1^-)\right) + \sum_{i=1}^{n} F_{ri}(tn) - Ra(t_{n-1}) \right]$$

3. Procédé selon l'une des revendications 1 et 2, **caractérisé en ce que** l'on utilise en outre, pour l'estimation de la vitesse du véhicule ou de l'association de véhicules :

- la longueur du ou des véhicules et/ou
- l'inertie des masses tournantes couplées mécaniquement à chaque roue ou groupe de roues mécaniquement indépendants et/ou
- l'effort moteur ou retardateur appliqué et/ou
- la variation brutale d'adhérence rencontrée par le ou chaque véhicule sur le chemin de roulement et la propagation de ladite variation d'adhérence sous les roues du ou des véhicules.

4. Procédé selon l'une quelconque des revendications 1 à 3, dans lequel ladite estimation de ladite vitesse dudit véhicule ou de ladite association de véhicules, à partir de ladite mesure desdites vitesses desdites roues mécaniquement indépendantes, est obtenue en ajoutant, à la vitesse dudit ou desdits véhicules mémorisée juste avant le glissement de toutes les roues, la variation de vitesse dudit ou desdits véhicules obtenue en intégrant l'accélération ou la décélération dudit véhicule ou dudit groupe de véhicules pendant le temps où toutes les roues glissent par rapport au chemin de roulement.

5. Procédé selon la revendication 1, dans lequel réaction dudit chemin de roulement audit effort moteur ou retardateur appliqué par la roue, ou par le groupe de roues mécaniquement indépendantes, est déduit de la mesure dudit effort moteur ou retardateur appliqué et de la vitesse de ladite roue ou dudit groupe de roues, d'une part, et de la connaissance de ladite inertie desdites masses tournantes liées à ladite roue ou audit groupe de roues, d'autre part.

6. Procédé selon la revendication 5, dans lequel ladite inertie desdites masses tournantes est définie comme étant l'inertie vue par l'organe moteur ou retardateur lorsque le coefficient de frottement par rapport au chemin de roulement, de la roue, ou du groupe de roues mécaniquement liées audit organe moteur ou retardateur, est nul, et donc lorsque la réaction du chemin de roulement est nulle.

7. Procédé selon l'une quelconque des revendications 1 à 6, dans lequel ladite masse dudit véhicule ou dudit groupe de véhicules est obtenue, selon le type de véhicule, par mesure de la pression dans les suspensions pneumatiques ou hydrauliques, ou par la mesure géométrique de l'enfoncement des suspensions mécaniques, ou par un tarage obtenu par calcul et mémorisation, au moment du premier démarrage après formation du convoi ou après un arrêt en station, à partir de la mesure de l'accélération du ou véhicules sur plat, lors de l'application d'un effort ne provoquant aucun glissement d'aucune roue par rapport au chemin de roulement.

8. Procédé selon la revendication 7, dans lequel ladite accélération est obtenue par dérivation de la moyenne des vitesses des roues.

9. Procédé selon la revendication 1 à 8, dans lequel ladite résistance à l'avancement, dépendant de la vitesse du ou des véhicules, est calculée en continu à un instant donné, à partir des coefficients caractéristiques de la résistance à l'avancement dudit ou desdits véhicules et de la vitesse du ou des véhicules estimée à l'instant de calcul précédant.

10. Procédé selon la revendication 9, dans lequel ledit calcul de ladite composante de l'accélération ou de ladite décélération de la pesanteur liée à la pente ou la rampe est fait en continu, et mémorisé avant l'instant de départ en glissement de toutes les roues, à partir du couple moteur ou retardateur appliqué à la roue par l'intermédiaire de la réaction du chemin de roulement, de l'accélération ou de la décélération du ou des véhicules, laquelle est obtenue par dérivation de la moyenne des vitesses des roues, de la masse du ou des véhicules et enfin de la résistance à l'avancement calculée à cet instant.

11. Procédé selon l'une quelconque des revendications 4 à 8, dans lequel l'accélération ou la décélération du ou des véhicules pendant le temps où toutes les roues glissent par rapport au chemin de roulement est obtenue en retranchant en valeur algébrique, de la réaction du chemin de roulement à l'effort moteur ou retardateur appliqué à la roue, ou au groupe de roues mécaniquement indépendant, la variation brutale d'adhérence rencontrée par le ou les véhicules sur le chemin de roulement et la propagation de ladite variation brutale d'adhérence sous les roues du ou des véhicules.

12. Procédé selon l'une quelconque des revendications 3 à 11, dans lequel la valeur initiale de ladite variation d'adhérence est obtenue par la différence entre les valeurs calculées des réactions du chemin de roulement entre l'instant immédiatement postérieur à l'instant où le glissement de toutes les roues est détecté, et l'instant précédent où au moins une roue était encore totalement adhérente.

13. Procédé selon l'une quelconque des revendications 4 à 12, dans lequel la propagation de ladite variation brutale d'adhérence est calculée comme étant la valeur initiale, diminuée linéairement en fonction du temps, d'un terme proportionnel à la vitesse du ou des véhicules au moment de la détection du glissement de toutes les roues, et inversement proportionnel à la longueur dudit véhicule ou desdits véhicules.

**Patentansprüche**

1. Verfahren zur Schätzung der Geschwindigkeit eines Fahrzeugs oder eines Fahrzeugverbandes ausgehend von der Messung der Geschwindigkeiten der mechanisch voneinander unabhängigen Räder während des Gleitens aller Räder bezüglich der Rollbahn, **dadurch gekennzeichnet, daß** es die folgenden Schritte umfaßt:

   - Messung der Geschwindigkeit des Rads Nr. i,
   - Schätzung der Reaktionskraft der Schiene auf das Rad Nr. i oder der Reaktion der Rollbahn auf die auf das Rad Nr. i ausgeübte Antriebs- oder Verzögerungskraft, ausgehend von der Messung der Geschwindigkeit des Rads Nr. i,
   - Messung der Masse des Fahrzeugs,
   - Schätzung des Fahrwiderstandes, der auf das Fahrzeug ausgeübt wird, bevor alle Räder zu gleiten beginnen,
   - Berechnung des Gefälles oder der Steigung der Rollbahn, bevor alle Räder zu gleiten beginnen, ausgehend von der Messung der Geschwindigkeit vor Gleiten des letzten zum Gleiten kommenden Rades,
   - Schätzung der Geschwindigkeit des oder der Fahrzeuge V(t) ausgehend von der Gleichung:

$$M \cdot \frac{dV(t)}{dt} = Mg \sin\left(\alpha\left(\overline{t}\right)\right) + \sum_{i=1}^{n} F_{Ti}(t) - R_a(t)$$

**15**

in der:

M die Masse des Fahrzeugs oder der Gruppe von Fahrzeugen ist,
g die Fallbeschleunigung ist,
$\alpha(t1)$ das Gefälle oder die Steigung der Rollbahn ist,
$F_{ri}t)$ die Reaktionskraft der Schiene oder Reaktion der Rollbahn auf die auf das Rad Nr. i ausgeübte Antriebs-
oder Verzögerungskraft ist,
Ra(t) der Fahrwiderstand ist und
n die Anzahl von Gruppen von unabhängigen Rädern ist.

2. Verfahren nach Anspruch 1, **dadurch gekennzeichnet, daß** es außerdem einen Schritt der Diskretisierung der Gleichung der Schätzung der Geschwindigkeit des Fahrzeugs umfaßt, wobei der Geschwindigkeitswert mit Hilfe der folgenden rekurrenten Gleichung erhalten wird:

$$V(tn) = V(tn-1) + \frac{(tn-tn-1)}{M} \cdot \left[ Mg\sin\left(\alpha(t_1)\right) + \sum_{i=1}^{n} F_{ri}(tn) - Ra(t_{n-1}) \right]$$

3. Verfahren nach einem der Ansprüche 1 und 2, **dadurch gekennzeichnet, daß** man außerdem für die Schätzung der Geschwindigkeit des Fahrzeugs oder des Fahrzeugverbandes

- die Länge des oder der Fahrzeuge und/oder
- die Trägheit der rotierenden Massen, die mit jedem Rad oder jeder Gruppe von mechanisch unabhängigen Rädern mechanisch gekoppelt sind, und/oder
- die ausgeübte Antriebs- oder Verzögerungskraft und/oder
- die plötzliche Haftungsänderung, die das oder jedes Fahrzeug auf der Rollbahn erfährt, und die Fortpflanzung dieser Haftungsänderung unter den Rädern des oder der Fahrzeuge verwendet.

4. Verfahren nach einem der Ansprüche 1 bis 3, bei dem die Schätzung der Geschwindigkeit des Fahrzeugs oder des Fahrzeugverbandes ausgehend von der Messung der Geschwindigkeiten der mechanisch voneinander unabhängigen Räder erhalten wird, indem zu der kurz vor dem Gleiten aller Räder gespeicherten Geschwindigkeit des oder der Fahrzeuge die Geschwindigkeitsänderung des oder der Fahrzeuge zugegeben wird, die erhalten wird, indem man die Beschleunigung oder Verlangsamung des Fahrzeugs oder der Fahrzeuggruppe während der Zeit, in der alle Räder bezüglich der Rollbahn gleiten, integriert.

5. Verfahren nach Anspruch 1, bei dem die Reaktion der Rollbahn auf die von dem Rad oder von der Gruppe von mechanisch unabhängigen Rädern ausgeübte Antriebs- oder Verzögerungskraft aus der Messung dieser ausgeübten Antriebs- oder Verzögerungskraft und der Geschwindigkeit des Rads oder der Gruppe von Rädern einerseits und aus der Kenntnis der Trägheit der mit dem Rad oder mit der Gruppe von Rädern verbundenen rotierenden Massen andererseits abgleitet wird.

6. Verfahren nach Anspruch 5, bei dem die Trägheit der rotierenden Massen als die Trägheit definiert wird, die von dem Antriebs- oder Verzögerungsorgan gesehen wird, wenn der Reibungskoeffizient des Rads oder der Gruppe von Rädern, die mit dem Antriebs- oder Verzögerungsorgan mechanisch verbunden sind, bezüglich der Rollbahn null ist und damit wenn die Reaktion der Rollbahn null ist.

7. Verfahren nach einem der Ansprüche 1 bis 6, bei dem die Masse des Fahrzeugs oder der Gruppe von Fahrzeugen je nach Fahrzeugtyp durch Messung des Drucks in den pneumatischen oder hydraulischen Federungen oder durch die geometrische Messung des Eindrückens der mechanischen Federungen oder durch Tarierung erhalten wird, die durch Berechnung und Speicherung, zum Zeitpunkt des ersten Anfahrens nach Bildung des Konvois oder nach einem Stillstand auf einer Station, ausgehend von der Messung der Beschleunigung des oder der Fahrzeuge auf der Ebene bei der Ausübung einer Kraft, die kein Gleiten irgendeines Rads bezüglich der Rollbahn verursacht, erhalten wird.

8. Verfahren nach Anspruch 7, bei dem die Beschleunigung durch Ableitung des Mittelwerts der Geschwindigkeiten der Räder erhalten wird.

9. Verfahren nach Anspruch 1 bis 8, bei dem der Fahrwiderstand, der von der Geschwindigkeit des oder der Fahrzeuge abhängt, kontinuierlich zu einem gegebenen Zeitpunkt ausgehend von den charakteristischen Koeffizienten des Fahrwiderstands des oder der Fahrzeuge und der Geschwindigkeit des oder der Fahrzeuge errechnet wird, die zum vorhergehenden Berechnungszeitpunkt geschätzt wurde.

10. Verfahren nach Anspruch 9, bei dem die Berechnung der mit dem Gefälle oder der Steigung verbundenen Komponente der Beschleunigung oder der Verlangsamung aufgrund der Schwere kontinuierlich vorgenommen wird und vor dem Zeitpunkt des Beginns des Gleitens aller Räder gespeichert wird, und zwar ausgehend von dem Antriebs- oder Verzögerungsmoment, das auf das Rad über die Reaktion der Rollbahn ausgeübt wird, von der Beschleunigung oder Verlangsamung des oder der Fahrzeuge, die durch Ableitung des Mittelwerts der Geschwindigkeiten der Räder erhalten wird, von der Masse des oder Fahrzeuge und schließlich von dem zu diesem Zeitpunkt berechneten Fahrwiderstand.

11. Verfahren nach einem der Ansprüche 4 bis 8, bei dem die Beschleunigung oder die Verlangsamung des oder der Fahrzeuge während der Zeit, in der alle Räder bezüglich der Rollbahn gleiten, erhalten wird, indem man als algebraischen Wert von der Reaktion der Rollbahn auf die auf das Rad oder die Gruppe von mechanisch unabhängigen Rädern ausgeübte Antriebs- oder Verzögerungskraft die plötzliche Haftungsänderung, die das oder die Fahrzeuge auf der Rollbahn erfahren, und die Fortpflanzung dieser plötzlichen Haftungsänderung unter den Rädern des oder der Fahrzeuge abschneidet.

12. Verfahren nach einem der Ansprüche 3 bis 11, bei dem der Anfangswert der Haftungsänderung durch die Differenz zwischen den errechneten Werten der Reaktionen der Rollbahn zwischen dem Zeitpunkt unmittelbar nach dem Zeitpunkt, zu dem das Gleiten aller Räder festgestellt wird, und dem vorhergehenden Zeitpunkt, zu dem mindestens ein Rad noch vollständig haftend war, erhalten wird.

13. Verfahren nach einem der Ansprüche 4 bis 12, bei dem die Fortpflanzung der plötzlichen Haftungsänderung berechnet wird als der linear in Abhängigkeit von der Zeit verminderte Anfangswert eines Terms, der zur Geschwindigkeit des oder der Fahrzeuge zum Zeitpunkt der Feststellung des Gleitens aller Räder proportional ist und zur Länge des Fahrzeugs oder der Fahrzeuge umgekehrt proportional ist.

**Claims**

1. Process for estimating the speed of a vehicle or of an assemblage of vehicles, based on measuring the speeds of the mechanically independent wheels, while all the wheels are slipping with respect to the rolling surface, **characterized in that** it comprises the following steps:

   - measuring the speed of wheel No i,
   - estimating the reaction force of the rail on wheel No i or the reaction of the rolling surface to the said drive load or retarding load applied to wheel No i, based on measuring the speed of wheel No i,
   - measuring the mass of the vehicle,
   - estimating the resistance to forward motion exerted on the vehicle before all the wheels begin to slip,
   - calculating the slope or the incline of the rolling surface before all the wheels begin to slip, based on measuring the speed before slipping of the last wheel starting to slip,
   - estimating the speed of the vehicle or vehicles V(t) from the relation:

$$M \cdot \frac{dV(t)}{dt} = Mg\sin\left(\alpha(t_1^-)\right) + \sum_{i=1}^{n} F_{ri}(t) - R_a(t)$$

   in which:

   M denotes the mass of the vehicle or of the group of vehicles,
   g denotes the acceleration due to gravity,

$$\alpha\left(t-\frac{1}{1}\right)$$

denotes the slope or incline of the rolling surface,
$F_{ri}(t)$ denotes the reaction force of the rail or reaction of the rolling surface to the drive retarding load applied to wheel No i,
Ra(t) denotes the resistance to forward motion, and
n denotes the number of groups of independent wheels.

2. Process according to Claim 1, **characterized in that** it furthermore comprises a step of discretizing the relation for estimating the speed of the vehicle, the value of the speed being obtained by means of the following recurrent relation:

$$V(tn)=V(tn-1)+\frac{(tn-tn-1)}{M}\bullet\left[Mg\sin\left(\alpha(t_1^-)\right)+\sum_{i=1}^{n}F_{ri}(tn)-Ra(t_{n-1})\right]$$

3. Process according to one of Claims 1 and 2, **characterized in that** to estimate the speed of the vehicle or of the assemblage of vehicles use is moreover made of:

   - the length of the vehicle or vehicles, and/or
   - the inertia of the rotating masses mechanically coupled to each wheel or group of mechanically independent wheels, and/or
   - the driving or retarding load applied, and/or
   - the abrupt variation in adhesion encountered by the or each vehicle on the rolling surface and the propagation of the said variation in adhesion under the wheels of the vehicle or vehicles.

4. Process according to any one of Claims 1 to 3, in which the said estimation of the said speed of the said vehicle or of the said assemblage of vehicles, based on the said measurement of the said speeds of the said mechanically independent wheels, is obtained by adding, to the speed of the said vehicle or vehicles, stored just before all the wheels slip, the variation in the speed of the said vehicle or vehicles, obtained by integrating the acceleration or deceleration of the said vehicle or of the said group of vehicles during the time for which all the wheels are slipping with respect to the rolling surface.

5. Process according to Claim 1, in which the reaction of the said rolling surface to the said driving or retarding load applied by the wheel, or by the group of mechanically independent wheels, is deduced from the measurement of the said driving or retarding load applied and of the speed of the said wheel or of the said group of wheels, on the one hand, and from knowledge of the said inertia of the said rotating masses linked to the said wheel or to the said group of wheels, on the other hand.

6. Process according to Claim 5, in which the said inertia of the said rotating masses is defined as being the inertia seen by the driving or retarding gear when the coefficient of friction with respect to the rolling surface, of the wheel, or of the group of wheels mechanically linked to the said driving or retarding gear, is zero, and hence when the reaction of the rolling surface is zero.

7. Process according to any one of Claims 1 to 6, in which the said mass of the said vehicle or of the said group of vehicles is obtained, depending on the type of vehicle, by measuring the pressure in the pneumatic or hydraulic suspensions, or by geometrical measurement of the sinking of the mechanical suspensions, or by a taring obtained by calculation and storage, on the occasion of the first start-up after formation of the convoy or after a stop at a station, on the basis of the measurement of the acceleration of the vehicle or vehicles on the flat, during the application of a load which causes no slipping of any wheel with respect to the rolling surface.

8. Process according to Claim 7, in which the said acceleration is obtained by differentiating the average of the speeds of the wheels.

9. Process according to Claims 1 to 8, in which the said resistance to forward motion, dependent on the speed of the

**EP 0 919 814 B1**

vehicle or vehicles, is calculated continuously at a given instant, on the basis of the coefficients characteristic of the resistance to forward motion of the said vehicle or vehicles and of the speed of the vehicle or vehicles, estimated at the previous calculation instant.

**10.** Process according to Claim 9, in which the said calculation of the said component of the acceleration or of the said deceleration due to gravity linked with the slope or the incline is carried out continuously and stored before the instant at which all the wheels start slipping, on the basis of the driving or retarding torque applied to the wheel via the reaction of the rolling surface, of the acceleration or of the deceleration of the vehicle or vehicles, which is obtained by differentiating the average of the speeds of the wheels, of the mass of the vehicle or vehicles and finally of the resistance to forward motion calculated at this instant.

**11.** Process according to any one of Claims 4 to 8, in which the acceleration or deceleration of the vehicle or vehicles during the time for which all the wheels are slipping with respect to the rolling surface is obtained by deducting, in terms of algebraic value, from the reaction of the rolling surface to the driving or retarding load applied to the wheel, or to the mechanically independent group of wheels, the abrupt variation in adhesion encountered by the vehicle or vehicles on the rolling surface and the propagation of the said abrupt variation in adhesion under the wheels of the vehicle or vehicles.

**12.** Process according to any one of Claims 3 to 11, in which the initial value of the said variation in adhesion is obtained through the difference between the calculated values of the reactions of the rolling surface between the instant immediately subsequent to the instant at which the slipping of all the wheels is detected and the previous instant at which at least one wheel was still fully adhering.

**13.** Process according to any one of Claims 4 to 12, in-which the propagation of the said abrupt variation in adhesion is calculated as being the initial value, decreased linearly as a function of time, of a term proportional to the speed of the vehicle or vehicles at the moment at which the slipping of all the wheels is detected and inversely proportional to the length of the said vehicle or of the said vehicles.

FIGURE 1

EP 0 919 814 B1